# DEMANDE DE BREVET EUROPEEN

(11) **EP 2 363 933 A1**
(43) Date de publication de la demande: **07.09.2011**
(21) Numéro de dépôt: 11305228.6
(22) Date de dépôt: 03.03.2011
(51) Int. Cl.: H02G 3/08

(54) **Dispositif d'étanchéité pour boitier éléctrique et bôitier électrique pourvu d'un tel dispositif**

(30) Priorité: 04.03.2010 FR 1000879
(71) Demandeur: Sibecx System SAS, 75005 Paris (FR)
(72) Inventeur: Gavino, Denis, 95310 PARIS (FR)
(74) Mandataire: Demulsant, Xavier

(57) **Abrégé**

Dispositif pour assurer une étanchéité de conducteurs électriques à l'entrée d'un boîtier (1), le dispositif formant un conduit (8) pour les conducteurs, et comprenant un corps creux (7) pourvu :
- d'une partie distale (9) par laquelle les conducteurs sont destinés à être introduits, cette partie distale (9) comportant des moyens d'étanchéité ;
- d'une partie proximale (10) prolongeant la partie distale (9) et comportant des moyens d'assemblage élastique du corps creux (7) sur le boîtier (1).

## Description

L'invention a trait au domaine des raccordements électriques, et plus précisément au domaine de l'étanchéité électrique sur un boitier électrique.

Dans la plupart des locaux, il est connu d'utiliser des boitiers électriques permettant d'installer des appareils électriques, tels que des interrupteurs, des prises de courant ou formant une dérivation électrique.

Les boitiers sont généralement intégrés dans les cloisons des locaux ou mis en saillie sur les cloisons. Les fils électriques s'étendant dans les cloisons sont amenés dans les boitiers, dans lesquels ils sont connectés à des dispositifs pour les alimenter et fournir la fonction désirée.

Le document US 2006/0169472 décrit un exemple de boîtier électrique. Des ouvertures sont prévues sur la paroi latérale du boitier pour permettre le passage des fils. Le boîtier comprend trois conducteurs annulaires, de diamètres différents, chacun relié à un fil électrique entrant dans le boîtier. En réalisant les connexions adéquates sur le boitier, on peut alors obtenir par exemple un interrupteur.

Un des problèmes rencontrés par l'utilisation des boitiers est la réalisation d'une étanchéité. En effet, afin d'éviter l'accumulation de poussière sur les fils, ou encore pour assurer l'étanchéité à l'air ou à l'eau, les fils sont généralement recouverts d'un fourreau de protection, en matière électriquement isolante, sur l'ensemble de leur longueur. Toutefois, les extrémités des fils servant de connexions doivent être dénudées.

Deux considérations s'opposent dans la conception de ces boitiers.

D'une part, la norme NF C15-100 impose que le fourreau de protection doit pénétrer dans le boitier, pour assurer une étanchéité continue à l'entrée du boitier.

Par exemple, le document GB 954 235 présente un dispositif comprenant un écrou assemblé sur le fourreau au moyen d'un joint. Le taraudage de l'écrou est amené à coopérer avec une portion filetée du boitier, un joint supplémentaire pouvant être placé entre l'écrou et le boitier. Ainsi, l'étanchéité est assurée, la portion dénudée des fils étant exclusivement dans le boitier.

Le document JP 2008-029080 présente un dispositif dans lequel le fourreau de protection est inséré de manière étanche dans un manchon, le manchon étant ensuite fixé sur l'ouverture d'un boitier, une portion du fourreau s'étendant dans le boitier.

D'autre part, pour des raisons d'encombrement, il est préférable que le fourreau ne pénètre pas dans le boitier. En effet, le boitier étant généralement intégré dans un logement creusé dans une cloison, la dimension totale du boitier doit être la plus faible possible afin que la cloison soit creusée sur une dimension la plus petite possible, en tout cas inférieure à l'épaisseur de cette cloison. Or, le fourreau englobant les fils présente une section de dimension non négligeable, bien supérieure à celle des fils, compliquant la conception du boitier. Ainsi, la présence du fourreau induit une perte d'espace dans le boîtier nécessitant d'augmenter la taille du boitier et donc du logement creusé dans la cloison.

Par ailleurs, la présence du fourreau gêne les connexions à réaliser dans le boitier.

Dans le document EP 1 482 614, il est proposé de retirer le fourreau de protection sur une portion extrême des fils et de ne faire pénétrer dans le boitier que cette portion. L'étanchéité est assurée en coinçant le fourreau contre la paroi latérale du boitier, puis en recouvrant d'un produit de scellement.

Une telle réalisation ne répond pas à la norme NF C15-100, le fourreau ne pénétrant pas dans le boitier. Le maintien du fourreau contre le boitier peut en outre s'avérer délicat à réaliser, dans la mesure où le jeu entre le fourreau et le boitier doit être minimal, laissant une portion des fils à l'air.

Les dispositifs proposés dans l'antérieur ne permettent pas de concilier efficacement la continuité de l'étanchéité et un faible encombrement.

Par ailleurs, les dispositifs proposés dans l'art antérieur impliquent une mise en place fastidieuse, à l'aide d'outils spéciaux, que ce soit pour fixer l'écrou dans le montage décrit par le document GB 954 235 ou pour injecter le matériau de recouvrement dans le montage décrit par le document EP 1 482 614.

La présente invention vise notamment à pallier ces inconvénients, en proposant un dispositif assurant une étanchéité conforme des fils électriques tout en diminuant l'encombrement dans le boitier.

A cet effet, l'invention propose, selon un premier aspect un dispositif pour assurer une étanchéité de conducteurs électriques à l'entrée d'un boîtier, le dispositif formant un conduit pour les conducteurs, et comprenant un corps creux pourvu :
- d'une partie distale par laquelle les conducteurs sont destinés à être introduits, cette partie distale comportant des moyens d'étanchéité ;
- d'une partie proximale prolongeant la partie distale et comportant des moyens d'assemblage élastique du corps creux sur le boîtier.

Par « *moyens d'assemblage élastique* » on désigne ici le fait que ces moyens d'assemblage, par leur dimensionnement et/ou le choix des matériaux, sont aptes à être déformés élastiquement lors de l'assemblage manuel du corps creux sur le boîtier.

La section du conduit dans la partie proximale du corps creux présente une dimension dans une direction longitudinale supérieure à la dimension dans une direction transversale, favorisant l'étalement des fils dans la direction transversale, de sorte que les fils se présentent de manière organisée à l'entrée du boitier.

Avantageusement, le conduit est de section sensiblement circulaire dans la partie distale du corps creux et de section sensiblement rectangulaire dans la partie proximale du corps creux. Cette disposition facilite la flexion du corps creux suivant une direction privilégiée lors du montage et facilite la bonne disposition des conducteurs à l'entrée de la cavité du boîtier.

Le dispositif comprend au moins une membrane munie d'ouvertures, au travers desquels les conducteurs sont destinés à passer. Les ouvertures sont réparties de manière homogène. Dans une mise en oeuvre, le dispositif comprend une membrane pourvue de trois ouvertures sensiblement disposées à 120 degrés les unes des autres. Les ouvertures sont par exemple coniques, de sorte à faciliter l'insertion des conducteurs.

Dans une mise en oeuvre avantageuse, le dispositif comprend un manchon rapporté à la partie distale du corps creux, ce manchon étant pourvu de ladite membrane d'étanchéité.

Par « *rapporté au corps creux* » on désigne ici l'assemblage du manchon au corps creux par emboitement ou coincement à force. Le manchon pourra être réalisé en un matériau présentant une plus grande élasticité que la partie distale du corps creux. L'opérateur pourra ainsi faire passer les conducteurs au travers du manchon, avant d'assembler ce manchon au corps creux.

Avantageusement, les moyens d'assemblage du corps creux sur le boîtier comprennent deux lèvres, chacune des deux lèvres comprenant deux languettes définissant une rainure, une des deux languettes étant élastique.

Dans un mode de réalisation, sur chacune des deux lèvres, la languette élastique s'étend sur une surface inférieure à celle de l'autre languette.

Avantageusement, les deux lèvres définissent entre elles sensiblement un angle droit.

Le boitier comprend une paroi de fond et une paroi latérale, et au moins une ouverture s'étendant avantageusement à cheval entre la paroi de fond et la paroi latérale. Dans une mise en oeuvre, à cette ouverture, la lèvre supérieure vient s'insérer sur la paroi latérale du boitier, la lèvre inférieure venant s'insérer sur la paroi de fond du boitier.

Dans certaines réalisations, l'axe du conduit est sensiblement parallèle à la paroi latérale du boitier. Dans d'autres réalisations, l'axe du conduit forme un angle de sensiblement quarante degrés avec la paroi latérale du boitier.

Avantageusement, le boitier est réalisé d'une seule pièce en moulage d'un matériau polymère, le corps creux étant réalisé en élastomère.

Avantageusement, le boitier comprend plusieurs ouvertures équidistantes, à cheval entre sa paroi de fond et sa paroi latérale. Dans une mise en oeuvre, ces ouvertures sont formées par défoncement manuel, suivant les besoins lors de la pose.

Dans certaines applications, le boitier comporte un composant placé dans sa cavité, ce composant étant monté en coulissement et rotation, ou étant encliqueté dans la cavité.

D'autres objets et avantages de l'invention apparaîtront à la lumière de la description faite ci-après en référence aux dessins annexés dans lesquels :
- la figure 1 est une vue latérale d'un boîtier électrique muni d'un dispositif d'étanchéité;

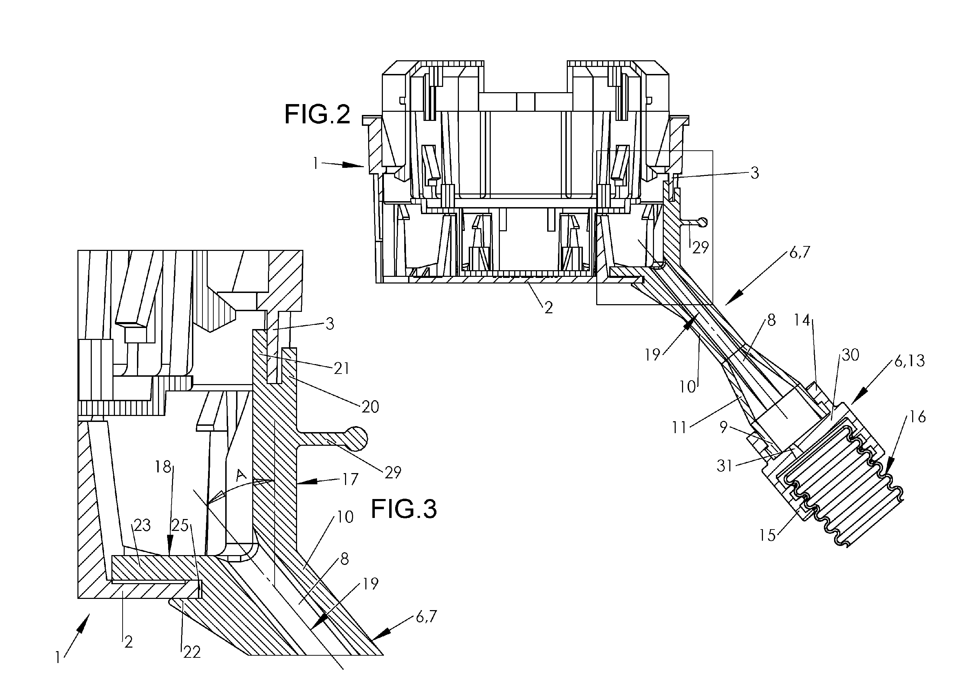

- la figure 2 est une vue en coupe selon le plan II-II de la figure 1; ,
- la figure 3 est une vue de détail de la figure 2;

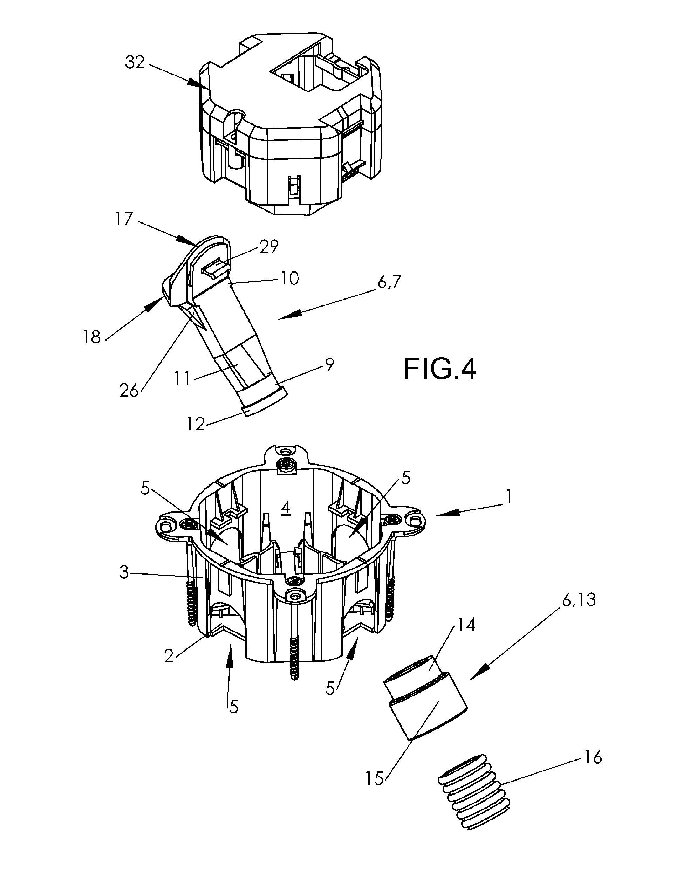

- la figure 4 est une vue en perspective éclatée des composants représentés assemblés en figure 1 ;

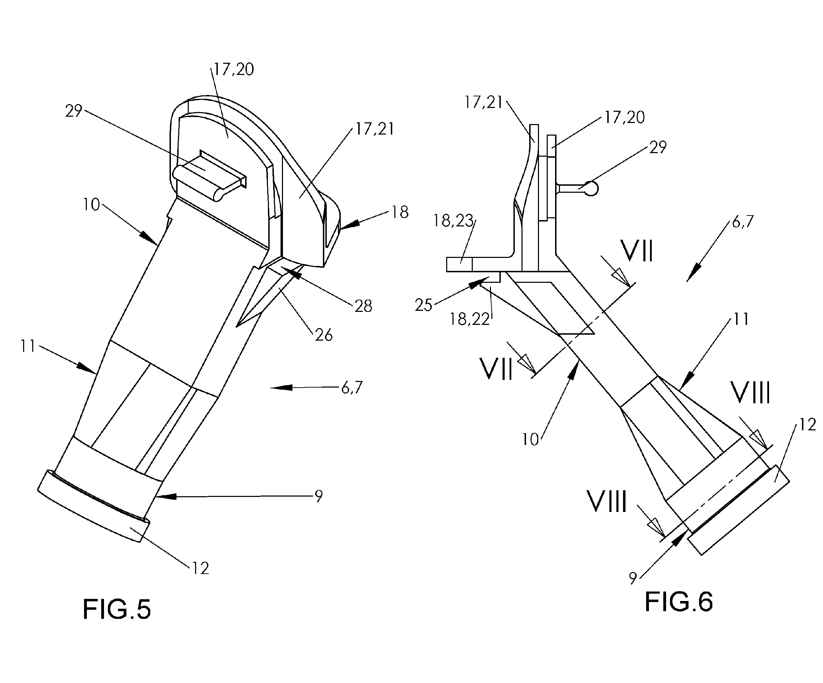

- la figure 5 est une vue en perspective d'une partie du dispositif d'étanchéité représenté en figure 1 ;
- la figure 6 est une vue latérale du dispositif de la figure 5 ;

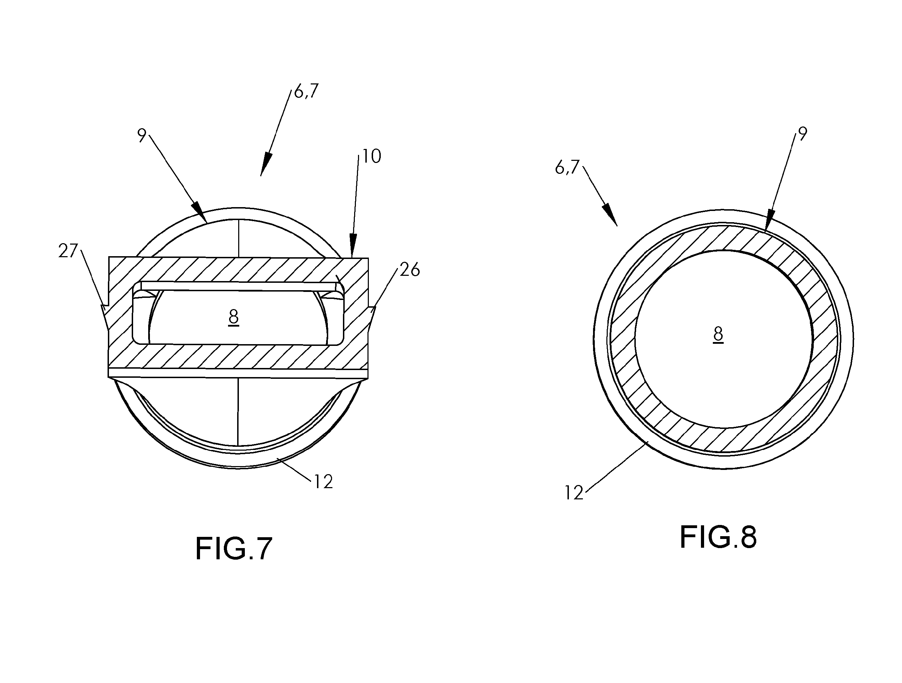

- la figure 7 est une vue en coupe selon le plan VII-VII de la figure 6 ;
- la figure 8 est une vue en coupe selon le plan VIII-VIII de la figure 6 ;

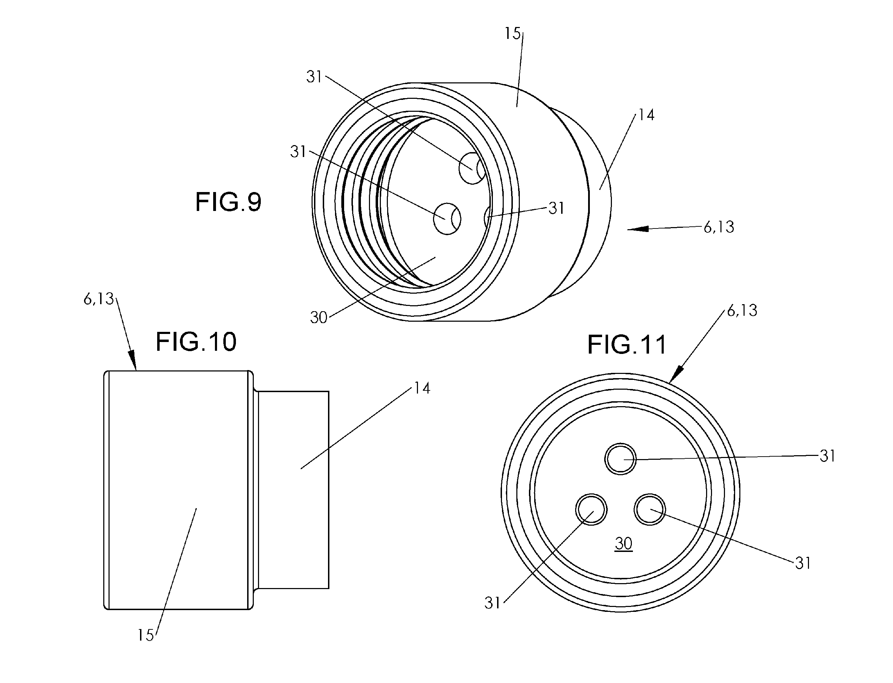

- la figure 9 est une vue en perspective d'un manchon d'étanchéité ;
- la figure 10 est une vue latérale du manchon représenté en figure 9 ;
- la figure 11 est une vue de face du manchon représenté en figure 9.

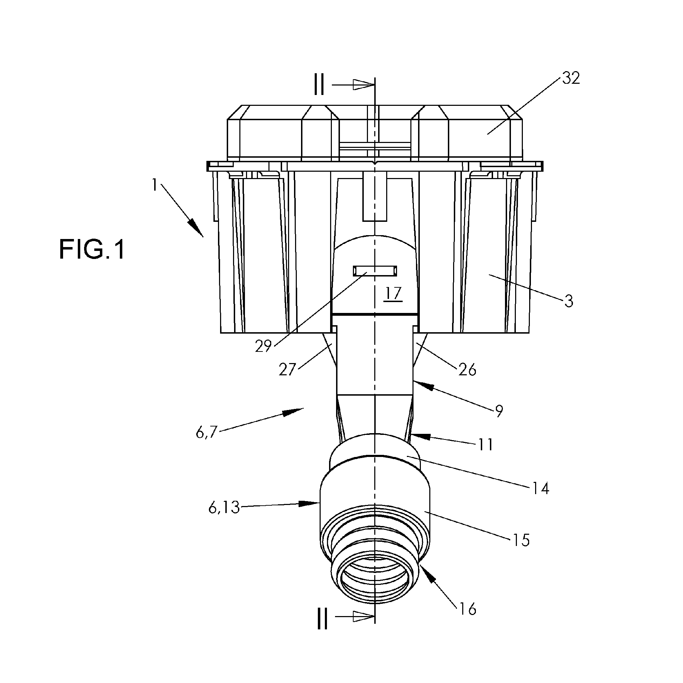

Sur la figure 1 est représenté un boitier électrique 1 muni d'un dispositif d'étanchéité pour fils électriques.

Par « *étanchéité* », on entend ici l'objectif d'empêcher l'air, l'eau ou encore les poussières de venir au contact des conducteurs.

Cette étanchéité vise à réduire les risques de courts-circuits et d'échauffements.

Une mauvaise étanchéité à l'air entraîne une dégradation des performances énergétiques des bâtiments, d'autant plus sensible que ces bâtiments sont par ailleurs éco-conçus (maisons passives, conception HQE). Les travaux du Grenelle de l'environnement ont fixé comme objectif général une réduction des consommations énergétiques de 38 % en 2020 dans le secteur du bâtiment et de l'habitat. Les logements à faibles besoins énergétiques, encore appelés bâtiments basse consommation (BBC), sont un des moyens dont la France dispose pour diviser par quatre ses émissions de gaz à effet de serre entre 1990 et 2050, comme elle s'y est engagée afin de limiter son impact sur le changement climatique. Les dispositions fiscales de la loi de finances pour 2009 permettent d'ailleurs aux communes et à leurs groupements "*d'instituer sur délibération (...) une exonération de cinq ans de la taxe foncière sur les propriétés bâties de 50 % ou de 100* % *pour les constructions de logements neufs achevées à compter du 1er janvier 2009 respectant la norme BBC*" (CGI, art. 200 quater mod. par L. fin. 2009, n° 2008-1425, 27 déc. 2008, art. 109).

Une mauvaise étanchéité à l'air favorise l'apparition de ponts thermiques préjudiciables à l'isolation, ces ponts thermiques entraînant en outre très souvent l'apparition de traces noirâtres autour des boîtiers.

Dans la suite de cette description, les termes « *distal* » et « *proximal* » sont employés en référence au boitier 1 , la partie proximale étant la partie montée sur le boitier 1 , la partie distale étant la partie qui s'en éloigne.

Le boitier 1 est un dispositif permettant de réaliser une sortie électrique, appelé également « ultra-terminal », en particulier à partir de fils électriques. Les fils électriques sont connectés dans le boitier 1 , de sorte qu'il est possible d'obtenir au moins une fonction à partir du boitier 1.

Par « *fonction* » on désigne ici notamment un effet technique obtenu par un moyen de commande, par exemple un interrupteur ; ou un effet technique obtenu par un moyen d'alimentation, par exemple une prise électrique, ou bien encore un effet technique obtenu par un moyen de transmission, par exemple transmission de données de type CPL (Courant Porteurs en Ligne), technologie qui utilise les lignes électriques pour faire passer de l'information.

Le boîtier est par exemple une boîte pour appareillage électrique destinée à être encastré dans une paroi ou à être rapportée en saillie sur une paroi, ou bien encore une boîte de dérivation de câbles et/ou de conducteurs électriques, une boîte formant tableau d'abonné à encastrer ou à rapporter en saillie sur une paroi.

Le boîtier trouve une application avantageuse dans la réalisation d'une boîte d'encastrement d'appareillage électrique à placer dans une paroi en briques ou en carreaux de plâtre.

Le boitier 1 comprend une paroi de fond 2 autour de laquelle s'élève verticalement, sensiblement à angle droit, une paroi latérale 3, de manière à définir une cavité 4, de section octogonale ou circulaire, apte à accueillir un système permettant d'obtenir la fonction désirée.

Au moins une ouverture 5 est ménagée sur le boitier 1, à cheval sur la paroi de fond 2 et la paroi latérale 3.

Dans le mode de réalisation représenté, le boîtier 1 est pourvu de deux plans de symétrie sensiblement perpendiculaires et quatre ouvertures 5 sont disposées à cheval sur la paroi de fond 2 et la paroi latérale 3. En pratique, les ouvertures 5 sont fermées par un opercule, lequel est retiré au moment de la pose. Par exemple, les ouvertures 5 sont formées par défoncement manuel de l'opercule les recouvrant. Ainsi, seules les ouvertures 5 nécessaires, dépendant de l'axe d'arrivée des fils électriques, sont dégagées de leur opercule, limitant l'intrusion d'éléments extérieurs dans le boitier 1 par des ouvertures superflues.

Les fils sont des éléments conducteurs généralement métalliques, par exemple en cuivre ou en aluminium, de section circulaire. Chaque fil est entouré d'une enveloppe dans un matériau électriquement isolant, par exemple en polymère. Le diamètre des fils est normalisé en fonction des tensions et des courants qu'ils doivent conduire. Ainsi, la norme NF C15-100 impose par exemple pour un fil assigné d'un courant maximal de 16 A une section de fil de 1,5mm².

En général, les fils sont regroupés par trois - deux fils pour former le circuit, un fil relié à la masse - dans une gaine assurant leur protection vis-à-vis des éléments extérieurs, comme l'air, l'eau et les poussières. Les gaines peuvent être lisses ou présenter des cannelures augmentant leur flexibilité. La section de la gaine est circulaire, les fils étant alors arrangés à 120 degrés dans la gaine. L'arrangement sera toutefois adapté au nombre de fils passant dans une gaine, pour s'inscrire dans la section circulaire de la gaine.

Dans ce qui suit, il sera pris un exemple de trois fils arrangés à 120 degrés dans la gaine. Toutefois, le principe exposé pourra être transposé à un plus grand nombre de fils.

L'extrémité des fils doit être sortie de la gaine pour pouvoir insérer les fils dans le boitier 1. La continuité de l'étanchéité à l'entrée du boitier 1 est assurée par le dispositif d'étanchéité 6.

Le dispositif d'étanchéité 6 comprend un corps creux 7, appelé joint, formant un conduit 8 le long d'un axe, les fils électriques s'étendant dans le conduit 8.

Le joint 7 comprend une partie distale 9 par laquelle les fils sont insérés, une partie proximale 10 par laquelle les fils émergent dans le boitier 1 et une partie intermédiaire 11 reliant la partie distale 9 à la partie proximale 10.

La partie distale 9 présente une section sensiblement circulaire, correspondant à la section de la gaine, dans laquelle les fils disposés à 120 degrés sont insérés, et est munie de moyens pour coopérer de manière étanche avec les fils électriques.

A cet effet, selon un premier mode de réalisation, la partie distale 9 est conformée pour s'assembler de manière étanche avec la gaine des fils électriques.

Dans le cas d'une gaine cannelée, la partie distale 9 peut présenter des cannelures, sur sa surface intérieure ou sa surface extérieure, sur lesquelles la gaine cannelée des fils électriques vient s'accrocher. Le diamètre intérieur ou extérieur de la partie distale 9 sera alors adapté pour recevoir la gaine de manière étanche.

Dans le cas où la gaine est lisse, par exemple pour des câbles de type RO2V, la gaine est introduite dans le conduit 8 de la partie distale 9 du joint 7. Le diamètre intérieur de la partie distale 10 est alors sensiblement égal au diamètre extérieur de la gaine. L'étanchéité est assurée par le frottement des parois de la gaine et de la partie distale 10 du joint 7.

De plus, la partie distale 10 peut présenter une élasticité lui permettant de se déformer autour ou par-dessus la gaine et de reprendre son état initial en contact intime avec la gaine, favorisant davantage l'étanchéité. Ainsi, lorsque la gaine est insérée dans la partie distale 10, la partie distale 10 peut avantageusement présenter un diamètre intérieur légèrement inférieur au diamètre extérieur de la gaine. A l'inverse, lorsque la gaine est adaptée par-dessus la partie distale 10, la partie distales 10 peut présenter un diamètre extérieur légèrement supérieur au diamètre intérieur de la gaine.

Selon un deuxième mode de réalisation, qui est également le mode préféré, la surface extérieure de la partie distale 9 est lisse et comprend un épaulement 12 et le dispositif d'étanchéité comprend un manchon 13 rapporté sur la partie distale 9 du joint 7. Le manchon 13 est adapté pour assurer la continuité de l'étanchéité. Ainsi, le manchon 13 est réalisé dans une matière élastique, de préférence en élastomère, et comprend une première partie 14 apte à venir s'insérer par déformation élastique sur la partie distale 9 du joint 7, et une deuxième partie 15 apte à recevoir la gaine 16 des fils. Par exemple, la surface intérieure du manchon 13 est cannelée, de manière à accrocher une gaine 16 cannelée. Les mêmes mises en oeuvre que celles déjà décrites pour la partie distale 10 selon le premier mode de réalisation peuvent être reprises pour le manchon 13 dans ce deuxième mode de réalisation.

L'élasticité du manchon 13 permet d'assurer l'étanchéité à la fois sur la gaine 16 et sur le joint 7, notamment pour éviter l'apparition de ponts thermiques.

La partie proximale 10 du joint 7 présente une section obligeant les fils à quitter la configuration initiale à l'intérieur de la gaine pour s'aligner dans un même plan. Ainsi, la section de la partie proximale 10 du joint 7 présente une dimension dans une direction longitudinale supérieure à une dimension dans une direction transversale, de sorte que les fils ne se chevauchent pas dans la direction transversale mais s'alignent suivant la direction longitudinale. Selon le mode de réalisation illustré sur les figures, la section est sensiblement rectangulaire, la dimension transversale - i.e. la largeur - étant inférieure à deux fois le diamètre des fils et la dimension longitudinale - i.e. la longueur - étant supérieure ou égale à trois fois le diamètre des fils, de sorte que les fils s'étalent dans le sens de la longueur de la section de la partie proximale 10 du joint 7, la superposition dans le sens de la largeur étant interdite. En variante, la section est de forme oblongue. Les dimensions transversale et longitudinale de la partie proximale 10 seront adaptées en fonction du diamètre et du nombre de fils.

La partie proximale 10 du joint 7 comprend en outre des moyens d'assemblage élastiques sur le boitier 1. Selon le mode préféré de réalisation, ces moyens d'assemblage comprennent une lèvre supérieure 17 et une lèvre inférieure 18 prolongeant la partie proximale 10.

Selon le mode préféré de réalisation, les lèvres 17, 18 sont placées le long des bords longitudinaux de la partie proximale 10. Les lèvres 17, 18 sont en outre disposées sensiblement à angle droit l'une de l'autre, de manière à s'adapter sur la paroi de fond 2 et la paroi latérale 3 du boitier 1. On comprendra toutefois que cet angle dépend de l'angle entre la paroi de fond 2 et la paroi latérale 3 du boitier, et qu'il est adapté en conséquence.

La lèvre supérieure 17 est par exemple dans le prolongement de la partie proximale 10, c'est-à-dire qu'elle s'étend sensiblement parallèlement à l'axe du conduit 8 du joint 7. Toutefois, avantageusement, la lèvre supérieure 17 forme un angle A non nul avec l'axe 19 du conduit 8. Ainsi, la dimension totale du boitier 1 muni du joint 7 mesurée dans la direction verticale est-elle réduite, diminuant avantageusement l'encombrement du boitier 1 et du dispositif d'étanchéité 6 dans la direction verticale pour faciliter son intégration dans l'épaisseur d'une paroi.

Toutefois, l'angle A doit être choisi de sorte, que lorsque les fils émergent dans le boitier 1, ils ne doivent pas être courbés de manière exagérée. En effet, il est préférable de conserver les fils au plus près de la paroi 2 de fond du boitier 1, afin de ne pas perdre l'espace qui pourrait se créer entre les fils et la paroi 2 de fond. Les fils entrant dans le boitier 1 suivant l'angle A doivent donc être courbés pour être ramenés contre la paroi 2 de fond. Plus le rayon de courbure est important, plus la perte d'espace est notable. Les inventeurs ont déterminés que pour un angle A d'environ quarante degrés, les conditions d'encombrement et de courbure étaient remplies de manière satisfaisante.

Chaque lèvre 17, 18 comprend deux languettes parallèles 20, 21 ; 22, 23, à distance l'une de l'autre, définissant une rainure 24, 25 entre les languettes.

L'ouverture de la rainure 24 définie par les languettes 20, 21 de la lèvre supérieure 17 correspond sensiblement à l'épaisseur de la paroi latérale 3 au voisinage d'une ouverture 5.

L'ouverture de la rainure 25 définie par les languettes 22, 23 de la lèvre 18 correspond sensiblement à l'épaisseur de la paroi de fond 2 au voisinage d'une ouverture 5.

Pour chaque lèvre 17, 18, une languette 21 , 23 est de dimension supérieure à l'autre 20, 22, ainsi qu'il sera explicité plus précisément par la suite.

Des ailettes 26, 27 sont placées en saillies sur la partie proximale 10, le long des bords transversaux de la section de la partie proximale 10, définissant avec la lèvre inférieure 18 un espace 28 de dimension inférieure ou égale à l'épaisseur de la paroi de fond 2 du boitier 1.

Une languette de préhension 29 aidant au montage, comme il sera vu plus loin, est placée en saillie sur la lèvre supérieure 17.

Une membrane 30 pourvue d'ouvertures 31 pour laisser passer les fils obture le conduit 8. Cette membrane 30 est placée en amont de la partie proximale 10. Les ouvertures 31 de passage de fils sont avantageusement de forme conique, facilitant l'introduction des fils dans les ouvertures, et de diamètre n'autorisant le passage que d'un unique fil. Le diamètre minimal de chaque ouverture 31 est inférieur ou égal au diamètre d'un fil, le passage étant autorisé par déformation élastique de la membrane 30, de sorte que la membrane réalise une étanchéité autour de chaque fil.

Les ouvertures 31 de la membrane sont réparties conformément à la configuration des fils dans la gaine. Ainsi, pour trois fils répartis à 120 degrés, la membrane 30 comprend 3 ouvertures réparties à 120 degrés également.

La séparation des fils par la membrane facilite l'étalement des fils dans la partie proximale 10, tout en organisant les fils pour qu'ils émergent dans le boitier 1 suivant un ordre défini.

La membrane 30 peut être placée à la jonction entre la partie distale 9 et la partie intermédiaire 11. Selon le mode préféré de réalisation, la membrane 30 est portée par le manchon 13. Avantageusement, la gaine 16 vient en appui contre la membrane 30, favorisant l'étanchéité.

L'assemblage du dispositif d'étanchéité 6 sur le boitier 1 va maintenant être décrit.

Tout d'abord, la partie distale 9 du joint 7 est introduite dans une ouverture 5 du boitier 1, par la cavité 4 du boitier 1. Le joint 7 est ensuite tiré jusqu'à ce que la languette 20 de plus petite dimension de la lèvre supérieure 17 vienne en butée contre la paroi latérale 3 et que la languette 22 de plus petite dimension de la lèvre inférieure 18 vienne en butée contre la paroi de fond 2.

En tirant sur le joint 7 notamment au moyen de la languette de préhension 29, la languette 20, 22 de plus petite dimension de chacune des deux lèvres 17, 18 est sortie à force de la cavité 4 du boitier 1, de sorte que la paroi 2, 3 du boitier 1 se retrouve coincée dans la rainure 24, 25 des languettes : la paroi de fond 2 est bloquée entre les deux languettes 22, 23 de la lèvre inférieure 18 et la paroi latérale 3 est coincée entre les deux languettes 20, 21 de la lèvre supérieure 17. Par ailleurs, les ailettes 26, 27 sont également sorties à force du boitier 1, ajoutant au blocage de la paroi de fond 2 contre la lèvre inférieure 18.

On comprend que le joint 7 admet une élasticité telle que les languettes 20, 21, 22, 23 et les ailettes 26, 27 se déforment pour sortir de la cavité 4 du boitier 1 et reprendre leur forme initiale, assurant le blocage du joint 7 sur le boitier 1, tout en garantissant la continuité de l'étanchéité.

Le manchon 13 est ensuite assemblé sur la gaine 16 des fils électriques, les fils traversant la membrane, puis rapporté sur la partie distale du joint.

Un composant 32 est ensuite placé dans la cavité 4 du boîtier 1 , ce composant étant avantageusement monté en coulissement, puis bloqué par exemple par rotation, ainsi qu'il est décrit dans le document FR 2 869 732 ou dans le document WO2005112204 de la demanderesse. En variante, le composant 32 est encliqueté dans la cavité 4 du boîtier 1. Le composant 32 permet d'obtenir la fonction voulue à partir du boitier 1 , par exemple un interrupteur ou une prise de courant.

Le dispositif 7 ainsi permet d'assurer la continuité de l'étanchéité des fils électriques à l'entrée dans un boitier 1, pour éviter l'apparition de ponts thermiques et des traces noirâtres associées. Ainsi, on diminue à la fois la dégradation esthétique des murs d'un bâtiment et les risques hygiéniques dues à ces traces.

Le dispositif 7 permet également de concilier les considérations d'encombrement avec les conditions de la norme NF C15-100. En effet, la gaine 16 des fils pénètre dans le joint 7, et plus précisément dans le manchon 13, conformément à la norme NF C15-100. Toutefois, le fourreau ne rentre pas dans le boitier 1 en tant que tel, limitant l'encombrement dans le boitier 1.

## Revendications

1. Dispositif pour assurer une étanchéité de conducteurs électriques à l'entrée d'un boîtier (1), le dispositif formant un conduit (8) pour les conducteurs, et comprenant un corps creux (7) pourvu :
- d'une partie distale (9) par laquelle les conducteurs sont destinés à être introduits, cette partie distale (9) comportant des moyens d'étanchéité ;
- d'une partie proximale (10) prolongeant la partie distale (9) et comportant des moyens d'assemblage élastique du corps creux (7) sur le boîtier (1),
les moyens d'assemblage comprenant deux lèvres (17, 18) prolongeant la partie proximale inclinées l'une par rapport à l'autre.

2. Dispositif selon la revendication 1 dans lequel le conduit (8) est de section sensiblement circulaire dans la partie distale (9) du corps creux (7).

3. Dispositif selon la revendication 1 ou 2, dans lequel la section du conduit (8) dans la partie proximale (10) du corps creux (7) présente une dimension dans une direction longitudinale supérieure à la dimension dans une direction transversale, favorisant l'étalement des fils dans la direction longitudinale.

4. Dispositif selon l'une des revendications 1 à 3, comprenant une membrane (30) munie d'ouvertures (31), au travers desquels les conducteurs sont destinés à passer.

5. Dispositif selon la revendication 4, **caractérisé en ce que** la membrane (30) est pourvue de trois ouvertures (31) sensiblement disposées à 120 degrés les unes des autres.

6. Dispositif selon l'une des revendications 4 ou 5 comprenant un manchon rapporté à la partie distale (9) du corps creux (7), ce manchon (13) étant pourvu de ladite membrane (30).

7. Dispositif selon l'une quelconque des revendications 1 à 6, **caractérisé en ce que** chacune des deux lèvres (17, 18) comprend deux languettes (20, 21 ; 22, 23) définissant une rainure (24, 25) et **en ce que**, sur chacune des deux lèvres (17, 18), une des deux languettes est élastique.

8. Dispositif selon la revendication 7, **caractérisé en ce que**, sur chacune des deux lèvres (17, 18), la languette élastique s'étend sur une surface inférieure à celle de l'autre languette.

9. Dispositif selon la revendication 7 ou la revendication 8, **caractérisé en ce que** les deux lèvres (17, 18) définissent entre elles sensiblement un angle droit.

10. Boitier pourvu d'un dispositif selon l'une quelconque des revendications précédentes, **caractérisé en ce qu'**il comprend une paroi de fond (2) et une paroi latérale (3), et au moins une ouverture (5) s'étendant à cheval entre la paroi de fond (2) et la paroi latérale (3).

11. Boitier selon la revendication 10 lorsqu'elle dépend des revendications 7 à 9, **caractérisé en ce que**, à l'ouverture (5), la lèvre supérieure (17) vient s'insérer sur la paroi latérale (3) du boitier (1), la lèvre inférieure (18) venant s'insérer sur la paroi de fond (2) du boitier (1).

12. Boitier selon la revendication 10 ou la revendication 11, **caractérisé en ce que** l'axe (19) du conduit (8) est sensiblement parallèle à la paroi latérale (3) du boitier (1).

13. Boitier selon la revendication 10 ou la revendication 11, **caractérisé en ce que** l'axe (19) du conduit (8) forme un angle de sensiblement quarante degrés avec la paroi latérale (3) du boitier (1).

14. Boitier selon l'une quelconque des revendications 11 à 13, **caractérisé en ce qu'**il est réalisé d'une seule pièce en moulage d'un matériau polymère, le corps creux étant réalisé en élastomère.

15. Boitier selon l'une quelconque des revendications 11 à 14, **caractérisé en ce qu'**il comprend plusieurs ouvertures (5) équidistantes.
